(19) Europäisches Patentamt

European Patent Office

Office européen des brevets

(11) **EP 0 575 838 B1**

(12) **EUROPEAN PATENT SPECIFICATION**

(45) Date of publication and mention
of the grant of the patent:
**22.05.1996 Bulletin 1996/21**

(51) Int. Cl.$^6$: **A01N 25/12**

(21) Application number: **93109398.3**

(22) Date of filing: **11.06.1993**

(54) **Pesticidal granular compositions and processes for making the same**

Granulierte pestizide Zusammensetzungen und Verfahren zur deren Herstellung

Compositions pesticides granulaires et leurs procédés de préparation

(84) Designated Contracting States:
**AT BE CH DE DK ES FR GB GR IE IT LI LU NL PT
SE**

(30) Priority: **23.06.1992 US 902853**

(43) Date of publication of application:
**29.12.1993 Bulletin 1993/52**

(73) Proprietor: **RHONE-POULENC AGROCHIMIE
69009 Lyon (FR)**

(72) Inventors:
• **Duvert, Patrice
F-69004 Lyon (FR)**
• **Marze, Xavier
F-69006 Lyon (FR)**
• **Long, David
Chapel Hill, North Carolina 27514 (US)**

(74) Representative: **Trolliet, Maurice
Rhône-Poulenc Agrochimie
Département Propriété Industrielle
14-20 Rue Pierre Baizet
B.P. 9163
F-69263 Lyon Cedex 09 (FR)**

(56) References cited:
**GB-A- 1 022 164          US-A- 4 979 979**

• **PATENT ABSTRACTS OF JAPAN vol. 5, no. 62 (C-52)25 April 1981**
• **GREAT LAKES ENTOMOLOGIST vol. 23, no. 1, 1990, pages 19 - 27 J.E.ARAYA ET AL 'Residual Action of Slow Release Systemic Insecticides on Rhopalosiphum Padi'**
• **CHEMICAL PATENTS INDEX, BASIC ABSTRACTS JOURNAL Section Ch, Week 8637, 5 November 1986 Derwent Publications Ltd., London, GB; Class C, AN 86-242342/37**

**Description**

BACKGROUND OF THE INVENTION.

I. Field of the invention.

The invention relates to a pesticidal granular composition useful in protecting various plants by application to the soil. More particularly, this invention provides a granular composition comprising an active ingredient of the herbicidal, fungicidal, insecticidal, nematocidal and/or bactericidal type, and a flour material having a vegetal origin as a substrate for the active ingredient.

II. Discussion of the prior art.

Prior art granules for soil application may be obtained by impregnating a porous mineral substrate (for example a clay) with a solution of the active ingredient. However they present some disadvantages such as the formation of dust during preparation, transportation, stocking and/or handling, and a certain difficulty to realize the impregnation when the active ingredient is insoluble or slightly soluble. The mineral granules have another disadvantage which is that a part of the active ingredient often is retained in the granules due to the porosity of the granules.

Some granules having a flour-based substrate have also been described in some documents of the prior art. FR-A-2.050.908 discloses solid baits for combatting gastropodes. Said products may be prepared by mixing an active ingredient of the molluscicidal type (i.e. metaldehyde) and durum wheat flour in conventional proportions with water to form a paste which is extruded into short rods. The product thus obtained generally swells in the humidity and becomes soft so that it easily should be able to play bait, but such baits are basically not desirable for use of insecticides, fungicides or herbicides.

Another reference, US-A-5183690 discloses the starch encapsulation of a biologically active ingredient by blending it with starch material and extruding under conditions, namely of temperature and humidity, selected to effect gelatinization of the starch matrix. These materials are designed to provide controlled-release of pesticides and this happens through water swelling of the final granular product. These products do not disintegrate ; the release of the active ingredient is thought to be carried out through the interstices of the starch matrix. Thus the said release is generally slow and may be altered by environmental conditions ; for this reason the product has somewhat limited utility.

GB-A-1022164 discloses herbicidal granular compositions in which the carrier and/or additive may be wheat flour. However, all the teaching is directed to the use of clay as the filler and additives are mainly other than flour in the detailed description of the invention. Thus, flour material is not the major component in these compositions. Moreover, it is said on page 1, line 48 that particular suitable fillers are clays having high absorptive properties which is an already discussed disadvantage explaining the advantage of our granules having little or no porous mineral substrate.

US-A-4979979 discloses also herbicidal granular compositions for use aerially with minimum drift. All the teaching of US-A-4979979 is focused on this particular type of application with the need to avoid drift, which drift is assessed by the drop time. Thus, even the attrition values given in this document are linked to the drop time (see col 5, lines 10-12). That means that the values given are for a selection of granules having an acceptable drop time and not for the granules as prepared. After this selection of granules, the attrition value is measured and the figure gives the amount of particulate which breaks down into dust and/or fine particles having drop time in excess of 35 sec. The granules of this invention are such that the attrition value is less than 2% by weight to particles having a drop time greater than 35 sec. Therefore, the granules tested in this test are a) a selection of granules having an acceptable drop time and b) granules which can give dust if this dust have a drop time lower than 35 seconds.

Moreover, clay is preferred to promote high density for antidrift (see col. 7, line 50). Also, with this type of granules the desired release rate is obtained. Thus, nothing in US-A-4979979 suggest to change clay for another material, especially a flour material.

Finally, US-A-4979979 not only suggests to use particles constructed from the same homogeneous clay material, but also gives a preferred shape for the granules to be used with respect to aerial application. The granules have to be spherical (see table 4) whereas our granules are cylinders due to the process of manufacturing, which shape is not at all the better one.

As a matter of fact, for certain application, fast availability of the active ingredient in the soil is needed, which the granules with controlled release cannot provide. Another object is to provide environmentally friendly formulations of pesticides. A further object of the invention is to provide granules which are friendly for the environment and which present the capacity to give a strong activity in a short period of time.

Another feature of the invention is to provide granules which avoid formation of dust during transportation, stockage (storage) and/or handling, which corresponds generally to a loss of active ingredient and efficiency, and to a decrease of the safety of the formulations of pesticides.

Other objects and advantages of the invention will also become apparent in the following description.

SUMMARY OF THE INVENTION.

The present invention therefore relates to a pesticidal granular composition useful for plant protection by application to the soil, which comprises :

-a) a flour material having a vegetal origin, the concentration of which being equal to or greater than 50 % by weight of dry substances, and
-b) a pesticidally active ingredient of the herbicidal, fungicidal, insecticidal, nematocidal and/or bactericidal type ; the said granular composition having further :
-c) a hardness, measured in conditions as hereafter defined, equal to or greater than 85% ;
-d) a water disintegration rate after 5 minutes stirring equal to or greater than 50% ; and
-e) a number of granules per gram of composition which is equal to or greater than 100.

According to a further embodiment of the invention, the granular composition has a water content which preferably is less than 20 % by weight, and more preferably is between 0.5 % and 15 %.

In this specification, the expression "vegetal origin" includes cereal species such as wheat, barley, oats, rye, maize or corn, sorghum, rice, bird-seed and buckwheat ; or non-cereal species such as, for example, soya bean.

The words "flour material" include either a flour made from only one vegetal species, or a mixture, for example binary or ternary, of different flours.

In a preferred embodiment of the present invention, the flour material originates from cereal species ; in a more preferred embodiment, the flour material originates from cereal species such as wheat, maize (or corn) or a mixture of them.

The flour may be obtained by grinding any seed of the above-mentioned vegetal species such as the well known kinds of flours available on the market. The high quality flours are particularly suitable, but for economical reasons it may be possible to use flours of lower quality as, for example, the low-flours, the brans, the regrinding flours.

The use of flour has many attractive advantages for agricultural treatment. Firstly, it is a biodegradable material. Secondly it is abundant and has a generally reasonable cost.

The pesticidally active ingredient of the present invention may be :

- either in the form of a solid material, which is soluble or insoluble in water ;
- or in the form of a liquid material, which is miscible or immiscible with water.

The words "active ingredient" include either one active substance or a mixture, for example binary or ternary, of active substances.

The present invention preferably relates to active ingredient which has a sufficient chemical stability (i.e. it does not degradate) and/or a sufficient physical stability (i.e. it does not volatilize) under the conjugated effect of heat at a temperature of about 50°C-110°C and moisture ; the word "sufficient" indicates that under the said conjugated effect, the possible loss of active substance(s) remains less than 5 % by weight. In these conditions, the active ingredient of the invention remains substantially unchanged under the temperature conditions of the drying step which may be carried out ( as hereafter indicated) at the end of the manufacturing process of the granules according to the invention. This drying step is useful to eliminate water and may reduce the water content of the final granules until the water content is in the ranges above-mentioned.

The active substances which may be used in the invention include:

- herbicides such as : diuron, aminotriazole, atrazine, sodium thiocyanate, glyphosate, oxadiazon, carbetamide, dichlobenil ;
- fungicides such as : iprodione, propiconazole, bromuconazole, maneb, triticonazole, triadimenol, difenoconazole, flutriafol, metalaxyl, oxadixyl, furalaxyl, ofurace, benalaxyl, phosphorous acid, phenylbenzamide derivatives such as those described in the French patent application 2.648.459, flutolanil, mepronil, thifluzamide, fludioxonil, fenpiclonil, thiophanate-methyl, hymexazol, carboxin, pencycuron, thiram, fosetyl-Al, ethirimol, etridiazole, quintozene, guazatine, chlorothalonil ;
- insecticides or nematocides such as : acrinathrin, aldicarb, bendiocarb, bromacil, carbaryl, carbofuran, chlorfluazuron, ethoprophos, lindane, diethon, disulfoton, diazinon, cypermethrin, thiophanox, chlormephos, chlorpyriphosethyl, pyrazole-type or imidazole type insecticides, tefluthrin ;
- bactericides such as : paranitrophenol, pentachlorophenol, benzoic acid, metal salts particularly of sodium, copper, manganese, cobalt, chromium and zinc derived as well from inorganic as organic acids such as carboxylate (as for example heptanoate, octanoate, benzoate and naphthenate).

The pesticidally active substances b) which are preferably used, include one substance or an association of substances such as oxadiazon, carbetamide, fosetyl-Al, iprodione, triticonazole, triadimenol, difenoconazole, phosphorous acid, metalaxyl, fludioxonil, pencycuron, quintozene, aldicarb, ethoprophos, pyrazole-type or imidazole type insecticides, paranitrophenol sodium benzoate or a mixture of them.

The following are the descriptions of the conditions according to which are measured the hardness and water disintegration rate :

\*  - the hardness :
Scope : in the test used, the granular material is separated into particle-sized fractions by using a series of sieves with a mechanical shaker that provides a uniform circular and tapping motion. A weighed portion of a fraction comprised between 1.6 and 0.4 mm of the sample is subjected to attrition with steel grinding balls for 30 minutes on the mechanical shaker. The sample is again screened through the finest sieve (0.4 mm) from the original stack, and the hardness is measured from the percent of sample passing through the sieve.
The basic apparatus is a shaker comprising a stack of from 6 to 13 sieves with progressive sifting from a broad mesh size to a narrow one, the coarsest size sieve being at the top of the stack while the finest size one is at the bottom. The method of use of the shaker is as follows:

1.200 g of sample are put into the top test sieve and stir during 10 minutes,
2. 100.0 ± 0.1 g of the fraction of the sample between 1.6 and 0.4 mm (between 11 and 38 mesh) are weighed and transfered into an empty pan. Ten steel balls (12.7 mm diameter) are placed in the pan which is closed with a lid. The pan is shaken for a period of 30 minutes, then opened and steel balls are removed. All material is transfered into the finest size sieve (0.4 mm, 38 mesh) alone, the pan is placed below and the whole is shaken again for 5 minutes. The material having passed through this sieve is weighed.

If A represents the weight in grains passed through this finest sieve used in last step above, the hardness is equal to 100-A %.
\*  - the water disintegration rate : it is measured as following:

I. Weight 3.0 grams of product which has been seived to desired size distribution of between 0.8 to 1.2 mm into a 250 ml glass beaker.
II. Place a 25.4 mm plastic coated magnetic stir bar into the beaker containing the sample, and place the beaker onto a magnetic stir plate, and then set the speed control system to high rotational speed.
III. Add 100 ml of deionized water (25° C) to beaker ; insure complete immersion of product in water. Then, turn magnetic stir plate power "on", and initiate timer.
IV. After pre-determined time interval, either 1 or 5 minutes, turn magnetic stir plate power "off", and pour the content of beaker through a 50 mesh (300 micrometers) sieve immediately after removing from the stir plate. The water disintegration rate increases when the stirring time increases, therefore when this water disintegration rate is equal to or greater than 50% after 1 minute, then it can be taken for sure that the water disintegration rate after 5 minutes stirring is also equal to or greater than 50%. The granular compositions of the invention have a water disintegration rate which is equal to or greater than 50% after 5 minutes stirring. A preferred water disintegration rate for these compositions is equal to or greater than 50% after 1 minute stirring.
V. Remove magnetic stir bar, rinse it with deionized water if necessary. Rinse beaker with 100 ml of water to remove remaining product, and pour through the 50 mesh sieve ; pouring over product captured on sieve to dislodge small particles from the product and thus forcing them through the sieve.
VI. Rinse collected product from the sieve by use of a wash bottle containing water : spray the water from underneath the sieve. Then collect water rinsate and the product captured on sieve into either plastic or glass petri dishes (the weight of each petri dish is known and recorded prior to introduction of sample).
VII. The sample is dried at 50-60° C to a constant weight. After all the moisture has been removed, the petri dishes are weighed. The water disintegration rate is expressed as the percentage of product which passed through the sieve :

$$\frac{(\text{weight of sample - weight of residue}) \times 100}{\text{weight of sample}}$$

The preferred hardness is equal to or greater than 90%. The preferred water disintegration rate is equal to or greater than 60% after 5 minutes stirring. A further preferred water disintegration rate is equal to or greater than 60% after 1 minute stirring.
As above-indicated, the granular composition according to the present invention comprises a number of granules per gram which is equal to or greater than 100. In order to have better disintegration and distribution on soil, a granular composition with more than 500 granules per gram is preferred ; a granular composition having 1000 to 4000 granules per gram is even more preferred.

According to a further embodiment of the invention, the granules have essentially a first small outline and a second outline optionally larger. The smallest outline may have various forms, i.e. a circular form or a substantially circular form which are preferred ; the maximum size of the smallest outline is lower than about 3 mm, and is preferably between about 2 and about 0.4 mm. The size of the larger outline is preferably lower than 2 or 3 times the maximum size of the smallest outline. In the case of a sphere the size of the smallest outline is equal to that of the larger outline.

The flour material concentration of the granular composition may vary within a wide range according to the specific nature of the various components of the granular composition, provided said concentration is equal to or greater than 50 % by weight of dry substances. In order to have improved performance, the granular composition more preferably has the flour material concentration which is within the range of 60 % to 98 % by weight of dry substances.

The concentration of active ingredient as hereabove defined inside the granular composition may vary from 0.05% to 50% by weight of dry substances depending on application and use contemplated and on effectiveness of said active ingredient.

The present granular composition may further comprise suitable additives in a liquid or solid form, provided that said additives are chemically inert to the flour material. The following additives are especially contemplated:

- f) one or more disintegrating agent(s). It may be advantageous to use them in particular when a very high water disintegration rate of the granules is desired, and also when flours of the granules, such as flour of durum wheat, are used. Disintegrating agents include : starch, sodium carboxymethylstarch ; cellulose such as microcrystalline cellulose ; modified celluloses such as sodium carboxymethylcellulose ; bentonite, aluminium and magnesium silicate ; sodium polynaphtalenesulfonate, sodium dodecylbenzenesulfonate, sodium dioctylsulfosuccinate, lignin sulfonate ; a saccharide compound such as lactose, fructose, sucrose, manitol, dextrose ; cross-linked polyvinylpyrrolidone material. When a disintegrating agent is used, the composition of the invention may contain 0.5 to 30% and preferably 1 to 20% by weight of dry substances of said agent(s);
- g) one or more binder(s). They are preferred to have greater hardness of the granules. Useful binders include : a mixture of proteins such as gluten, casein ; polymer such as polyvinyl alcohol, polyvinyl acetate, polyvinylpytrolidone, urea-formaldehyde polycondensate. The composition of the invention may contain, when used, 0.5 to 10% and preferably 1 to 5% by weight of dry substances of said binder(s);
- h) one or more pigment(s), preferably in an amount of 0.01 to 2 % by weight of dry substances;
- i) one or more repulsive agent(s)/animal repellent(s) which may be bad-smelling or bad-tasting in order to avoid the ingestion of the granular composition according to the invention by domestic animals and/or by useful fauna. Repulsive agents which can be used include : the benzyldiethyl(2,6-xylylcarbamoylmethyl)ammonium benzoate, the VPAM repellent wich is a mixture of aromatic smelling compounds. The composition of the invention may contain, when used, 0.001 % to 4 % and preferably 0.002 % to 2 % by weight of dry substances of said repulsive agent(s);
- j) one or more mineral additive(s). These may be added to adjust the density of the mixture or added as nutrients for plants. These include calcium sulfate, mica, calcium carbonate, calcium bentonite, amonium carbonate, potassium carbonate, potassium phosphate (mono or di basic), sodium borate, amonium sulfate, etc ; salts and buffers such as potassium chloride, potassium citrate, sodium citrate, calcium acetate, sodium acetate, EDTA can also be added to improve the water disintregation rate and/or to stabilize the active ingredients ;
- k) one or more lubricant(s) can be added to improve the flow of the mixture through the extrusion mould. These include stearic acid and metallic salts thereof, polyoxyethylene glycol, graphite, petroleum waxes, polyethylene, teflon ;
- l) one or more flow agent(s) and or adsorbant(s) can be added to provide consistent/uniform transfer/flow/handling properties. These include precipitated and fumed silica dioxide, aluminium dioxide, calcium silicate, graphite and mica. Addition of these agents may also increase the rate of drying following extrusion, improve the rate of disintegration in water and improve the flow properties of the dried granular product. The flow agents can be added either prior to extrusion or following the drying step. This addition can further improve the application properties.

The manufacturing process of the granular composition, is another feature of the present invention. This process may include tile following steps :

The various components are intimately blended together, for example by means of known mechanical mixers.

The water content of the starting flour material is not critical ; in general it corresponds to the natural water content, which may be as high as 10 %, or even 15 % by weight. The average particle size of the flour material is generally equal to or less than 500 micrometers. When the active ingredient is a solid material, it may be used in the form of a powder having an average particle size generally equal to or less than 200 micrometers.

Water is then added in an amount of about 10 to 60 % of the weight of the blend. Then, the wet mixture is extruded in an extruder, which may be of conventional type.

The extruder, which may be used has no dead volume, that is to say, no material can remain non-moving during the extrusion process, either when kneading or forcing through a die. Such an apparatus is well known in the art and it may comprise one or several screw(s). According to a preferred embodiment of the present invention, the precited wet mixture is extruded in a one screw or a twin screw extruder. Extruders which may be used in the invention are those known for example in manufacturing of pasta.

The temperature of the material during extrusion is generally less than 65°C and preferably between 20°C and 40°C. If necessary, this temperature is maintained at the desired value by cooling, for example by means of a water circulation around the sleeve and/or the die of the extruder. The pressure of the extruded material, when extruded, taken just before entering into the die, may be more than $2.10^5$ Pa and preferably is between $3.10^5$ Pa and 10 MPa.

The die may be of the conventional type and may present one or several hole(s) of various forms, but the circular form is preferred. In general, the die is formed of metal ; but teflon insert(s) may be present inside the hole(s) of the die ; this is useful to polish the extruded stick(s) so that a finer surface aspect is obtained and the hardness of the granules may be increased. When coming out of the die, the extruded material is in the form of stick(s) and may be subjected to a hot air current before being cut into granules by means of a known mechanical knife apparatus, for example a rotating-knife fitted with one or several blade(s) which turns at a rate regulated in order to obtain granules having the desirable size.

The die may also be in the form of a device comprising one or more hole-bored screen(s), allowing a radial discharge of the extrudate. In this case, the granules may be formed by the self-cutting of the sticks obtained in a radial manner.

The granules formed in this manner may be subsequently subjected to a drying step. This drying step is useful to eliminate water and may reduce the water content of the final granules until it is in the ranges above-mentioned, i.e. preferably less than 20 % and more preferably between 0.5% and 15 % by weight. Said drying step, when it is used, may be carried out in a vibrating or a turning drying-apparatus where a hot air current, possibly wet, is sent ; but other means of drying are, of course, also usable. The heating time, which varies with the temperature, and the temperature depend on the size of the granules, on the desired amount of water added at the beginning of the process and on the desired water content in the final granules. It is generally of the order of 20 minutes to 3 hours at about 40°C to 150°C.

In certain cases, when one starts from an active ingredient or another component which could not bear the final drying step due to the fact that, in totality or in part, it degradates or it volatilizes under the conjugated effect of heat and moisture, it is possible to introduce said component for example by impregnating the cooled granules with a solution or a dispersion of said component.

The granules according to the present invention are useful in plant protection by application to the soil. Application may be by any conventional means which concern solid materials; said means include :

- full-surface spreading ;
- depositing of the granules simultaneously with the planting of the vegetal seeds in the seeding rows ;
- hiding the granules in the soil ;
- depositing punctually the granules, in particular at the feet of the plants to protect.

The dose as an amount of effective granular composition to be applied may be : in the case of full-surface spreading, from 5 kg/ha to 200 kg/ha and preferably 10 kg/ha to 150 kg/ha ; in the case of depositing in the seeding rows, from 0.1 kg/km to 5 kg/km and preferably 0.2 kg/km to 3 kg/km.

In order to further illustrate the present invention and the advantages thereof, the following examples are given, it being understood that same are intended only as illustrative and in nowise limitative.

EXAMPLE 1

|  | weight of dry substances (g) |
|---|---|
| FOSETYL-AL (1) | 108 |
| IPRODIONE (1) | 54 |
| SODIUM BENZOATE | 20 |
| LACTOSE | 50 |
| SODIUM LIGNOSULFONATE | 70 |
| SODIUM DIOCTYLSULFOSUCCINATE | 30 |
| MAIZE/CORN FLOUR (2) | 578 |
|  | 910g |
| WATER (normal quantity in flour) | 90g |
|  | 1000g |

(1) : 99 % of particles were less than 150 micrometers.
(2) : 98 % of particles were less than 500 micrometers and 52 % were less than 250 micrometers.

This composition was mixed, then was fed into an horizontal blender and mixed with 28 % of water. The wet blend was extruded in a one screw extender having a screw diameter D of 213 mm, a screw length of 7.5 D and a screw speed of 6 turns/minutes, fitted with a die with several 0.8 mm holes. The pressure during extrusion was equal to 8 MPa and the temperature of the material being extruded was between 20 and 25°C. The extruded sticks were cut with a rotating knife with 4 blades to give granules having a length between 1 and 2 mm, and the granules were dried in a series of rotating dryers during 45 minutes at 105°C, to give a water content of 1 % by weight. 800 kg of granules were manufactured during this industrial unit trial.

Number of granules per gram : about 1200.
The hardness of the granule was greater than 98% (sieve 0.4 mm, 38 mesh).
The water disintegration rate was 85% (after 5 minutes stirring).
The smallest outline of the granules is a circle of 0.8 mm diameter.
The largest outline of the granules is between 1 and 2 mm.

EXAMPLE 2

|  | weight of dry substances (g) |
|---|---|
| FOSETYL-AL (1) | 108 |
| IPRODIONE (1) | 54 |
| SODIUM BENZOATE | 20 |
| SODIUM LIGNOSULFONATE | 70 |
| SODIUM DIOCTYLSULFOSUCCINATE | 20 |
| LACTOSE | 60 |
| MAIZE/CORN FLOUR (2) | 578 |
|  | 910g |
| WATER (normal quantity in flour) | 90g |
|  | 1000g |

(1) : Granulometry : same as example 1.
(2) : Granulometry : same as example 1.

All these components were blended, then fed into a pilot plant for the preparation of spaghetti. 30% of water was added to the powder and the wet powder was extruded in a one screw extruder having a screw diameter D of 50 mm, a screw length of 7.6 D and a screw speed of 20 turns/minute, fitted with a die with 0.8 mm circular holes, under a pressure of 8 MPa and at a temperature of the material being extruded of about 35°C. Spaghetti of 0.8 mm of diameter were cut with a rotating knife with 3 blades at a length of about 1 mm, and the granules were dried for a period of 90 minutes at 105°C, until a water content of 1 % by weight was obtained.

The hardness of the granules was greater than 95% (sieve 0.4 mm, 38 mesh).

The water disintegration rate was 70% (after 1 minute stirring).

Number of granules per gram : about 1400.

The smallest outline of the granules is a circle of 0.8 mm diameter.

The largest outline of the granules is about 1 mm.

EXAMPLE 3

|  | weight of dry substances (g) |
|---|---|
| FOSETYL-AL (1) | 108 |
| IPRODIONE (1) | 54 |
| SODIUM BENZOATE | 20 |
| SODIUM LIGNOSULFONATE | 70 |
| SODIUM DIOCTYLSULFOSUCCINATE | 20 |
| LACTOSE | 60 |
| MAIZE/CORN FLOUR (2) | 578 |
|  | 910g |
| WATER (normal quantity in flour) | 90g |
|  | 1000g |

(1) : Granulometry : same as example 1.
(2) : Granulometry : same as example 1.

All these components were blended, then fed into a pilot plant for the preparation of spaghetti. 30% of water was added to the powder and the wet powder was extruded in a one screw extruder having a screw diameter D of 50 mm, a screw length of 7.6 D and a screw speed of 20 turns/minute, fitted with a die with 1 mm circular holes, under a pressure of 8 MPa and at a temperature of the material being extruded of about 35°C. Spaghetti of 1 mm of diameter were cut with a rotating knife with 3 blades at a length of about 1 mm, and the granules were dried for a period of 90 minutes at 105°C, until a water content of 1 % by weight was obtained.

The hardness of the granules was greater than 95% (sieve 0.4 mm, 38 mesh).

The water disintegration rate was 51% (after 1 minute stirring).

Number of granules per gram : about 1400.

The smallest outline of the granules is a circle of 1 mm diameter.

The largest outline of the granules is about 1 mm.

EXAMPLE 4

| | weight of dry substances (g) |
|---|---|
| FOSETYL-AL (1) | 108 |
| IPRODIONE (1) | 54 |
| REGRINDING WHEAT FLOUR (2) | 204 |
| MAIZE/CORN FLOUR (3) | 519 |
| | 885 |
| WATER (normal quantity in flours) | 115 |
| | 1000g |

(1) : Granulometry : same as example 1.
(2) : 93.8 % of particles were less than 287 micrometers.
(3) : Granulometry : same as example 1.

After blending and moistening by 39% of water, this composition was extruded on the same pilot as described in example 3. The granules were dried for a period of 83 minutes at 105°C until a water content of 1% by weight was obtained. The result was 3 kg of granules with the following characteristics :

Hardness : 99.8% (sieve 0.4 mm, 38 mesh).
Water disintegration rate : 55.4%(after 5 minutes stirring).
Number of granules per gram : about 1400.
The smallest outline of the granules is a circle of 1 mm diameter.
The largest outline of the granules is about 1 mm.

EXAMPLE 5

| | weight of dry substances (g) |
|---|---|
| FOSETYL-AL (1) | 108 |
| IPRODIONE (2) | 54 |
| SODIUM LIGNOSULFONATE | 70 |
| SODIUM DIOCTYLSULFOSUCCINATE | 20 |
| LACTOSE | 60 |
| BENZOIC ACID | 20 |
| MAIZE/CORN FLOUR (3) | 578 |
| | 910g |
| WATER (normal quantity in flour) | 90g |
| | 1000 g |

(1) : Granulometry : same as example 1.
(2) : 99 % of particles were less than 40 micrometers.
(3) : Granulometry : same as example 1.

All these components were blended and then were fed into the pilot as described in example 2. 30% of water was added to the powder. The wet blend was extruded through a die with several holes of 0.8 mm of diameter. The extruded sticks were cut at a length of about 1 mm. The granules were dried for a period of 120 minutes at 80°C, until a water content of 1 % by weight was obtained. 3 kg of granules were produced with the following characteristics:

Hardness : greater than 95% (sieve 0.4 mm, 38 mesh).
Water disintegration rate : 65.3% (after 1 minute stirring).
Number of granules per gram : about 1500.
The smallest outline of the granules is a circle of 0.8 mm diameter.
The largest outline of the granules is about 1 mm.

EXAMPLE 6

The procedures of example 5 were repeated but with introduction of 50 ppm of benzyldiethyl(2,6-xylycarbamoylmethyl)ammonium benzoate. This product with a very strong bitterness decreases the risk of ingestion of the granules by domestic animals and useful fauna.

EXAMPLE 7

The procedures of example 5 were repeated but with spraying on the granules, after the drying step, 1 % by weight of a the VPAM repellent, which is a mixture of aromatic smelling compounds. This product decreases the risk abovementioned in example 6.

EXAMPLE 8

Iprodione/fosetyl-Al granules. Biological test against cotton damping-off due to the pathogen Rhizoctonia solani.
Test made with the granules of example 2 and of example 5 which contain 10.8 % fosetyl-Al and 5.4 % iprodione (% are those calculated with wet flours).
A substrate was contaminated with a mycelial culture of Rhizoctonia solani (inoculum : 1 part/substrate : 200 parts). Pots were filled with this contaminated substrate. Two rows were made by hand. In each row, 5 cotton seeds (var. Alcala) were sowed with the granules to be tested. These granules were used at 465 g per km of row. The pots were incubated in the greenhouse at 25°C, 80-100 % of relative humidity, for a period of 13 days. At the end of the test, the number of plants which were dead or contaminated by the fungus were noted. By comparison with a standard (contaminated and non treated), the percentage efficacy was calculated.

Results : standard : 75 % of contaminated plants.

Example 2 : 75 % efficacy. (i.e. 18.75 % of contaminated plants)

Example 5 : 70 % efficacy. (i.e. 22.5 % of contaminated plants)

EXAMPLE 9

|  | weight of dry substances (g) |
|---|---|
| OXADIAZON (1) | 21 |
| CARBETAMIDE (1) | 17.5 |
| VICTORIA BLUE | 0.15 |
| PARANITOPHENOL | 3.5 |
| MAIZE/CORN FLOUR (2) | 828.54 |
|  | 870.69 |
| WATER (normal quantity in flour) | 129.31g |
|  | 1000g |

(1) : 95 % of particles were less than 40 micrometers.
(2) : Granulometry : same as example 1.

All these components were blended and mixed with 50 % of water. The wet blend was extruded in an apparatus which comprised a twin screw extruder having a screw diameter D of 55 mm, a screw length of 5.3 D and a screw speed of 32 turns/minute, and it was fitted with a die comprising 2 lateral screens with holes of 0.7 mm of diameter. The granules, having a length comprised between 2 and 3 mm, were dried for a period of 30 minutes at 70°C, to a water content of 9 % by weight.

Number of granules per gram : about 3300.

Hardness : 95% (sieve 0.4 mm, 38 mesh).

Water disintegration rate : 93% (after 5 minutes stirring).

The smallest outline of the granules is a circle of 0.7 mm diameter.

The largest outline of the granules is between 2 and 3 mm.

Herbicide activity:

-In greenhouse:

Seed pans of 30x30 cm with earth were sown with a known quantity of mustard-seeds (Sinapis spp.) 500 seeds. The herbicide granules were uniformly spread on the seed pans at the rate of 120 Kg/ha. The seed pans were sprinkled each day with water.

After 7 days the efficacy was monitored visually and by weighing the young plants of mustard. In comparison with seed pans reference, the herbicidal activity of the granules was 72 % (i.e. 72 % of the mustard do not grow).

-In field trials:

Plots of 2 square meter were sown by mustard-seeds and ray-grass seeds and other weeds which were also present in the soil. Plots were treated by the herbicide granules at a rate of 120 kg/ha. Efficacy was monitored visually and by counting of the young plants. In comparison with test plots, after 7 days the herbicidal activity was 45%, after 15 days the herbicidal activity was 65%.

EXAMPLE 10

|  | weight of dry substances (g) |
|---|---|
| 1-HALOARYL-3-CYANO PYRAZOLE INSECTICIDE Tech.(micronized) | 15.3 |
| MAIZE FLOUR (1) | 687.4 |
| SODIUM BENZOATE | 20 |
| SODIUM LIGNOSULFONATE | 80 |
| LACTOSE | 60 |
| SODIUM DIOCTYLSULFOSUCCINATE | 30 |
|  | 892.7 |
| WATER (normal quantity in flour) | 107.3 |
|  | 1000 |

(1) : Granulometry : same as example 1.

After blending and moistening by 30% of water, this composition was extruded on the same pilot as described in example 2. The granules were dried for a period of 90 minutes at 105°C until a water content of about 1 % by weight was obtained. The result was 4 kg of granules with the following characteristics :
Hardness : greater than 95% (sieve 0.4 mm, 38 mesh).
Water disintegration rate : 89% (after 5 minutes stirring).
Number of granules per gram : about 1400.
The smallest outline of the granules is a circle of 0.8 mm diameter.
The largest outline of the granules is about 1 mm.

EXAMPLE 11

|  | weight of dry substances (g) |
|---|---|
| 1-HALOARYL-3-CYANO PYRAZOLE INSECTICIDE Tech.(micronized) | 15.3 |
| MAIZE FLOUR | 696.1 |
| SODIUM BENZOATE | 20 |
| LACTOSE | 60 |
| MICA | 100 |
|  | 891.4 |
| WATER (normal quantity in flour) | 108.6 |
|  | 1000 |
| (1) : Granulometry : same as example 1. | |

After blending and moistening by 30% of water, this composition was extruded on the same pilot as described in example 2. The granules were dried for a period of 90 minutes at 105°C until a water content of about 1% by weight was obtained. The result was 4 kg of granules with the following characteristics :

Hardness : greater than 95% (sieve 0.4 mm, 38 mesh).
Water disintegration rate : 72.4% (after 5 minutes stirring).
Number of granules per gram: about 1400.
The smallest outline of the granules is a circle of 0.8 mm diameter.
The largest outline of the granules is about 1 mm.

**Claims**

1. A pesticidal granular composition useful to plant protection by application to the soil which comprises :

   -a) a flour material having a vegetal origin, the concentration of which being equal to or greater than 50 % by weight of dry substances, and
   -b) an active ingredient of the herbicidal, fungicidal, insecticidal, nematocidal and/or bactericidal type ;
   the said granular composition having further :
   -c) a hardness equal to or greater than 85% ;
   -d) a water disintegration rate after 5 minutes stirring equal to or greater than 50% ; and
   -e) a number of granules per gram of composition which is equal to or greater than 100.

2. The granular composition according to claim 1 which has a water disintegration rate after 1 minute stirring equal to or greater than 50%.

3. The granular composition according to claim 1 or 2 in which the water content is less than 20 % by weight.

4. The granular composition according to claim 1 or 2 in which the water content is between 0.5 % and 15 %.

5. The granular composition according to claim 1 or 2 in which the flour material concentration is between 60 % and 98 % by weight of dry substances.

6. The granular composition according to claim 1 or 2 wherein the flour material a) originates from one or more cereal species.

7. The granular composition according to claim 1 or 2 wherein the flour material originates from cereal species such as wheat, maize (or corn) or a mixture of them.

8. The granular composition according to claim 1 or 2 wherein the active ingredient b) includes one substance or an association of substances such as oxadiazon, carbetamide, fosetyl-Al, iprodione, triticonazole, triadimenol, difenoconazole, phosphorous acid, metalaxyl, fludioxonil, pencycuron, quintozene, aldicarb, ethoprophos, pyrazole-type or imidazole type insecticides, paranitrophenol, sodium benzoate or a mixture of them.

9. The granular composition according to claim 1 or 2 wherein the active ingredient concentration is between 0.05 and 50% by weight of dry substances.

10. The granular composition according to claim 1 for which :

    - the hardness is equal to or greater than 90% ;
    - the water disintegration rate is equal to or greater than 60% after 5 minutes stirring ;
    - the number of granules per gram is more than 500.

11. The granular composition according to claim 2 for which :

    - the hardness is equal to or greater than 90% ;
    - the water disintegration rate is equal to or greater than 60% after 1 minute stirring ;
    - the number of granules per gram is more than 500.

12. The granular composition according to claim 10 or 11 wherein the number of granules per gram is between 1000 and 4000.

13. The granular composition according to claim 1 or 2 in which the granules have essentially a first small outline and a second outline optionally larger, the maximum size of the smallest outline being lower than 3 mm and the size of larger outline being lower than 2 or 3 times the maximum size of the smallest outline.

14. The granular composition according to claim 1 or 2 in which the granules have essentially a first small outline and a second outline optionally larger, the maximum size of the smallest outline being between 0.4 and 2 mm and the size of larger outline being lower than 2 or 3 times the maximum size of the smallest outline.

15. The granular composition according to claim 1 or 2 which comprises further the following suitable additive(s) :

-f) one or more disintegrating agent(s) ; and/or
-g) one or more binder(s) ; and/or
-h) one or more pigment(s) ; and/or
-i) one or more repulsive agent(s) ; and/or
-j) one or more mineral additive(s) ; and/or
-k) one or more lubricant(s) ; and/or
-l) one or more flow agent(s).

16. The granular composition according to claim 1 or 2 which comprises further the following suitable additive(s) :

-f) 0.5 to 30% by weight of dry substances of one or more disintegrating agent(s) ; and/or
-g) 0.5 to 10% by weight of dry substances of one or more binder(s) ; and/or
-h) 0.01 to 2% by weight of dry substances of one or more pigment(s) ; and/or
-i) 0.001 to 4% by weight of dry substances of one or more repulsive agent(s).

17. The granular composition according to claim 1 or 2 which comprises further the following suitable additive(s) :

-f) 1 to 20% by weight of dry substances of one or more disintegrating agent(s) ; and/or
-g) 1 to 5% by weight of dry substances of one or more binder(s) ; and/or
-h) 0.01 to 2% by weight of dry substances of one or more pigment(s) ; and/or
-i) 0.002 to 2% by weight of dry substances of one or more repulsive agent(s).

18. The granular composition according to claim 1 or 2 extruded and cut.

19. A process for the manufacturing of the granular composition according to claim 1 which comprises the following steps :

- the various components are intimately blended together in a known mechanical mixer, and water is then added in an amount of about 10 to 60% of the weight of the blend ;
- then, the wet mixture thus obtained is extruded in a conventional extruder, the temperature of the material during extrusion being at a value less than 65°C, and the pressure, taken just before entering into the die, being more than $2.10^5$ Pa ;
- then, the stick(s) obtained at the exit of the die is (are) cut into granules ;
- then, the granules formed in this manner may be subjected to a drying step.

20. The process according to claim 19 in which the temperature of the material during extrusion is between 20°C and 40°C and the pressure, just taken before entering into the die, is between $3.10^5$ Pa and 10 MPa.

21. The process according to claim 19 wherein the final drying step, when it is carried out, is generally of the order of 20 minutes to 3 hours at about 40°C to 150°C.

22. A process for the manufacturing of the granular composition according to claim 2 which comprises the following steps :

- the various components are intimately blended together in a known mechanical mixer, and water is then added in an amount of about 10 to 60% of the weight of the blend ;
- then, the wet mixture thus obtained is extruded in a conventional extruder, the temperature of the material during extrusion being at a value less than 65°C, and the pressure, taken just before entering into the die, being more than $2.10^5$ Pa ;

- then, the stick(s) obtained at the exit of the die is (are) cut into granules ;
- then, the granules formed in this manner may be subjected to a drying step.

23. The process according to claim 22 in which the temperature of the material during extrusion is between 20°C and 40°C and the pressure, just taken before entering into the die, is between $3.10^5$ Pa and 10 MPa.

24. The process according to claim 22 wherein the final drying step, when it is carried out, is generally of the order of 20 minutes to 3 hours at about 40°C to 150°C.

25. A method of use of the granular composition according to claim 1 to protect plants whereby the composition is applied to the soil in which the plants are growing or are to be grown.

26. A method of use of the granular composition according to claim 2 to protect plants whereby the composition is applied to the soil in which the plants are growing or are to be grown.

27. The method of use according to claim 25 or 26 wherein the composition is applied by :

- full-surface spreading ; or,
- depositing of the granules simultaneously with the planting of the vegetal seeds in the seeding rows ; or,
- hiding the granules in the soil ; or,
- depositing punctually the granules, in particular at the feet of the plants to protect.

28. The method of use according to claim 25 or 26 wherein the dose as an amount of effective granular composition to be applied is in the case of full-surface spreading, from 5 kg/ha to 200 kg/ha, and in the case of depositing in the seeding rows, from 0.1 kg/km to 5 kg/km.

**Patentansprüche**

1. Zum Schutz von Pflanzen durch Anwendung auf den Boden geeignete pesticide, in Granulatform vorliegende Zusammensetzung, die enthält:

a) ein Mehl pflanzlicher Herkunft, dessen Konzentration größer gleich 50 Gew.-% der Trockensubstanzen ist, und
b) einen Wirkstoff vom Typ der Herbicide, Fungicide, Insecticide, Nematocide und/oder Bactericide,
wobei die in Granulatform vorliegende Zusamensetzung des weiteren aufweist:
c) eine Härte größer gleich 85 %,
d) eine Auflösungsgeschwindigkeit in Wasser nach 5 min Rühren größer gleich 50 % und
e) eine Anzahl von Granulatkörnern pro Gramm der Zusammensetzung, die größer gleich 100 ist.

2. In Granulatform vorliegende Zusamensetzung nach Anspruch 1, die eine Auflösungsgeschwindigkeit in Wasser nach 1 min Rühren größer gleich 50 % aufweist.

3. In Granulatform vorliegende Zusamensetzung nach Anspruch 1 oder 2, wobei der Wassergehalt geringer als 20 Gew.-% ist.

4. In Granulatform vorliegende Zusamensetzung nach Anspruch 1 oder 2, wobei der Wassergehalt 0,5 bis 15 % beträgt.

5. In Granulatform vorliegende Zusamensetzung nach Anspruch 1 oder 2, wobei die Konzentration des Mehls 60 bis 98 Gew.-% der Trockensubstanzen beträgt.

6. In Granulatform vorliegende Zusamensetzung nach Anspruch 1 oder 2, wobei das Mehl a) von einer oder mehrerer Species Cerealien stammt.

7. In Granulatform vorliegende Zusamensetzung nach Anspruch 1 oder 2, wobei das Mehl von Cerealien, wie beispielsweise Weizen, Mais, oder einem Gemisch aus Weizen und Mais stammt.

8. In Granulatform vorliegende Zusamensetzung nach Anspruch 1 oder 2, wobei der Wirkstoff b) eine Substanz oder eine Verbindung von Substanzen, wie z.B. Oxadiazon, Carbetamid, Fosetyl-Al, Iprodion, Triticonazol, Triadimenol, Difenoconazol, Phosphorsäure, Metallaxyl, Fludioxonil, Pencycuron, Quintozene, Aldicarb, Ethoprohos, Insecticiden vom Pyrazol- oder Imidazoltyp, Paranitrophenol, Natriumbenzoat oder ein Gemisch davon enthält.

9. In Granulatform vorliegende Zusamensetzung nach Anspruch 1 oder 2, wobei die Konzentration des Wirkstoffs 0,05 bis 50 Gew.-% der Trockensubstanzen beträgt.

10. In Granulatform vorliegende Zusamensetzung nach Anspruch 1 oder 2, wobei

   - die Härte größer gleich 90 %,
   - die Auflösungsgeschwindigkeit in Wasser größer gleich 60 % nach 5 min Rühren ist und
   - mehr als 500 Granulatkörner in 1 Gramm Zusammensetzung vorhanden sind.

11. In Granulatform vorliegende Zusamensetzung nach Anspruch 2, wobei

   - die Härte größer gleich 90 %,
   - die Auflösungsgeschwindigkeit in Wasser größer gleich 60 % nach 1 min Rühren ist und
   - mehr als 500 Granulatkörner in 1 Gramm Zusammensetzung vorhanden sind.

12. In Granulatform vorliegende Zusamensetzung nach Anspruch 10 oder 11, wobei die Anzahl der in 1 Gramm Zusammensetzung vorhandenen Granulatkörner 1000 bis 4000 beträgt.

13. In Granulatform vorliegende Zusamensetzung nach Anspruch 1 oder 2, wobei die Granulatkörner im wesentlichen eine erste kleine Kontur und eine zweite Kontur aufweisen, die wahlweise größer ist, wobei die maximale Größe der kleinsten Kontur unter 3 mm liegt und die Größe der größeren Kontur um das zwei- oder dreifache kleiner als die maximale Größe der kleinsten Kontur ist.

14. In Granulatform vorliegende Zusamensetzung nach Anspruch 1 oder 2, wobei die Granulatkörner im wesentlichen eine erste kleine Kontur und eine zweite Kontur aufweisen, die wahlweise größer ist, wobei die maximale Größe der kleinsten Kontur 0,4 bis 2 mm beträgt, und die Größe der größeren Kontur um das zwei- oder dreifache kleiner als die maximale Größe der kleinsten Kontur ist.

15. In Granulatform vorliegende Zusamensetzung nach Anspruch 1 oder 2, die des weiteren die folgenden geeigneten Additive enthält:

   f) ein oder mehrere zerfallfördernde Mittel und/oder
   g) ein oder mehrere Bindemittel und/oder
   h) ein oder mehrere Pigmente und/oder
   i) ein oder mehrere Abwehrmittel und/oder
   j) ein oder mehrere mineralische Additive und/oder
   k) ein oder mehrere Schmiermittel und/oder
   l) eine oder mehrere Flußmittel.

16. In Granulatform vorliegende Zusamensetzung nach Anspruch 1 oder 2, die des weiteren die folgenden geeigneten Additive enthält:

   f) 0,5 bis 30 Gew.-% Trockensubstanzen eines oder mehrerer zerfallfördernder Mittel und/oder
   g) 0,5 bis 10 Gew.-% Trockensubstanzen eines oder mehrerer Bindemittel und/oder
   h) 0,01 bis 2 Gew.-% Trockensubstanzen eines oder mehrerer Pigmente und/oder
   i) 0,001 bis 4 Gew.-% Trockensubstanzen eines oder mehrerer Abwehrmittel.

17. In Granulatform vorliegende Zusamensetzung nach Anspruch 1 oder 2, die des weiteren die folgenden geeigneten Additive enthält:

   f) 1 bis 20 Gew.-% Trockensubstanzen eines oder mehrerer zerfallfördernder Mittel und/oder
   g) 1 bis 5 Gew.-% Trockensubstanzen eines oder mehrerer Bindemittel und/oder
   h) 0,01 bis 2 Gew.-% Trockensubstanzen eines oder mehrerer Pigmente und/oder
   i) 0,002 bis 2 Gew.-% Trockensubstanzen eines oder mehrerer Abwehrmittel.

**18.** In Granulatform vorliegende Zusamensetzung nach Anspruch 1 oder 2, wobei die Zusammensetzung stranggepreßt und geschnitten wird.

**19.** Verfahren zur Herstellung der in Granulatform vorliegenden Zusamensetzung nach Anspruch 1 mit den folgenden Schritten:

- inniges Mischen der verschiedenen Komponenten miteinander in einer bekannten mechanischen Mischvorrichtung und Zugeben von Wasser in einer Menge von etwa 10 bis 60 Gew.-% des Gemisches,
- Strangpressen des feuchten Gemisches in einem herkömmlichen Extruder, wobei die Temperatur des Materials während des Strangpressens unter 65 °C und der Druck kurz vor dem Eintritt in die Düse mehr als $2 \cdot 10^5$ Pa beträgt,
- Schneiden des/der am Ausgang der Düse erhaltenen Stabes/Stäbe zu Granulat,
- evtl. Trocknen des auf diese Weise ausgebildeten Granulats.

**20.** Verfahren nach Anspruch 19, wobei die Temperatur des Materials während des Strangpressens 20 bis 40 °C und der Druck kurz vor dem Eintritt in die Düse $3 \cdot 10^5$ Pa bis 10 MPa beträgt.

**21.** Verfahren nach Anspruch 19, wobei der abschließende Trocknungsschritt, wenn er durchgeführt wird, im allgemeinen in einem Zeitraum von 20 min bis 3 h bei einer Temperatur von etwa 40 bis 150 °C durchgeführt wird.

**22.** Verfahren zur Herstellung der in Granulatform vorliegenden Zusammensetzung nach Anspruch 2 mit den folgenden Schritten:

- Inniges Mischen der verschiedenen Komponenten miteinander in einer bekannten mechanischen Mischvorrichtung, wonach Wasser in einer Menge von etwa 10 bis 60 Gew.-%, bezogen auf das Gewicht des Gemisches, zugegeben wird,
- das so erhaltene feuchte Gemisch wird sodann in einem herkömmlichen Extruder stranggepreßt, wobei die Temperatur des Materials während des Strangpressens weniger als 65 °C und der Druck kurz vor dem Eintritt in die Düse mehr als $2 \cdot 10^5$ Pa beträgt,
- der/die am Ausgang aus der Düse erhaltene/n Stab/Stäbe wird/werden zu Granulat geschnitten,
- danach kann das auf diese Weise ausgebildete Granulat einem Trocknungsschritt ausgesetzt werden.

**23.** Verfahren gemäß Anspruch 22, wobei die Temperatur des Materials beim Strangpressen 20 bis 40 °C beträgt und der Druck kurz vor dem Eintritt in die Düse $3 \cdot 10^5$ Pa bis 10 MPa beträgt.

**24.** Verfahren gemäß Anspruch 22, wobei der abschließende Trocknungsschritt, wenn er durchgeführt wird, im allgemeinen in einem Zeitraum von 20 min bis 3 h bei einer Temperatur von etwa 40 bis 150 °C durchgeführt wird.

**25.** Verfahren zur Verwendung der in Granulatform vorliegenden Zusammensetzung nach Anspruch 1 zum Schutz von Pflanzen, wobei die Zusammensetzung auf den Boden angewendet wird, in dem die Pflanzen wachsen oder aufwachsen gelassen werden.

**26.** Verfahren zur Verwendung der in Granulatform vorliegenden Zusammensetzung nach Anspruch 2 zum Schutz von Pflanzen, wobei die Zusammensetzung auf den Boden angewendet wird, in dem die Pflanzen wachsen oder aufwachsen gelassen werden.

**27.** Verfahren zur Verwendung nach Anspruch 25 oder 26, wobei die Zusammensetzung durch

- Ausbringen auf die gesamte Oberfläche,
- Einbringen des Granulats gleichzeitig mit den Pflanzensamen in die Saatreihen,
- Einbringen des Granulats in den Boden oder
- punktförmiges Ausbringen des Granulats, insbesondere am Fuß der zu schützenden Pflanzen angewendet wird.

**28.** Verfahren zur Verwendung nach Anspruch 25 oder 26, wobei die Dosen als Menge der wirksamen anzuwendenden, in Granulatform vorliegenden Zusammensetzung bei einem Ausbringen auf die gesamte Oberfläche 5 bis 200 kg/ha und bei einem Einbringen in Saatreihen 0,1 bis 5 kg/km betragen.

**Revendications**

1. Une composition pesticide granulée utilisable pour la protection des plantes par traitement du sol, qui comprend :

   -a) un produit à base de farine ayant une origine végétale, dont la concentration est égale ou supérieure à 50% en poidsdu produit sec, et
   -b) une matière active pesticide de type herbicide, fongicide, insecticide nématocide et/ou bactéricide ; la dite composition ayant en outre :
   -c) une dureté égale ou supérieure à 85% ;
   -d) un taux de désintégration dans l'eau après 5 minutes d'agitation, égal ou supérieur à 50% ; et
   -e) un nombre de granulés par gramme de composition égal ou supérieur à 100.

2. La composition granulée selon la revendication 1 ayant un taux de désintégration dans l'eau après une minute égal ou supérieur à 50%.

3. La composition granulée selon la revendication 1 ou 2 dans laquelle la teneur en eau est inférieure à 20% en poids.

4. La composition granulée selon la revendication 1 ou 2 dans laquelle la teneur en eau est comprise entre 0,5 et 15%.

5. La composition granulée selon la revendication 1 ou 2 dans laquelle la concentration en produit à base de farine est comprise entre 60% et 98% en poidsdu produit sec.

6. La composition granulée selon la revendication 1 ou 2 dans laquelle le produit à base de farine provient de une ou plusieurs espèces de céréales.

7. La composition granulée selon la revendication 1 ou 2 dans laquelle le produit à base de farine provient de céréales telles que le blé, le maïs, ou un mélange de ces espèces.

8. La composition granulée selon la revendication 1 ou 2 dans laquelle la matière active b) est un produit ou un mélange de produits choisis parmi les produits suivants : l'oxadiazon, le carbétamide, le phoséthyl Al, l'iprodione, le triticonazole, le triadiménol, le difénoconazole, l'acide phosphoreux, le métalaxyl, le fludioxonyl, le pencycuron, le quintozène, l'aldicarb, l'éthoprophos, des insecticides de la famille du pyrazole ou de l'imidazole, le paranitrophénol, le benzoate de sodium

9. La composition granulée selon la revendication 1 ou 2 dans laquelle la concentration en matière active est comprise entre 0,05 et 50% en poidsdu produit sec

10. La composition granulée selon la revendication 1 dans laquelle :

    - la dureté est supérieure ou égale à 90% ;
    - le taux de désintégration dans l'eau est égal ou supérieur à 60% après 5 minutes d'agitation ;
    - le nombre de granulés par gramme est supérieur à 500.

11. La composition granulée selon la revendication 2 dans laquelle :

    - la dureté est supérieure ou égale à 90% ;
    - le taux de désintégration dans l'eau est égal ou supérieur à 60% après 1 minute d'agitation
    - le nombre de granulés par gramme est supérieur à 500.

12. La composition granulée selon la revendication 10 ou 11 dans laquelle le nombre de granulés par gramme est compris entre 1000 et 4000.

13. La composition granulée selon la revendication 1 ou 2 dans laquelle les granulés ont essentiellement une première petite dimension extérieure et une deuxième dimension extérieure éventuellement plus grande, la taille maximum de la plus petite dimension extérieure étant inférieure à 3 mm et la taille de la dimension extérieure la plus grande étant inférieure à 2 ou 3 fois la taille maximum de la dimension extérieure la plus petite.

14. La composition granulée selon la revendication 1 ou 2 dans laquelle les granulés ont essentiellement une première petite dimension extérieure et une deuxième dimension extérieure éventuellement plus grande, la taille maximum de la plus petite forme extérieure étant comprise entre 0,4 et 2 mm et la taille de la dimension extérieure la plus grande étant inférieure à 2 ou 3 fois la taille maximum de la dimension extérieure la plus petite.

15. La composition granulée selon la revendication 1 ou 2 qui comprend en outre les additifs convenables suivants :

 - f) un ou plusieurs agents de désintégration ; et/ou
 - g) un ou plusieurs liants ; et/ou
 - h) un ou plusieurs pigments ; et/ou
 - i) un ou plusieurs agents répulsifs ; et/ou
 - j) un ou plusieurs additifs minéraux ; et/ou
 - k) un ou plusieurs agents lubrifiants ; et/ou
 - l) un ou plusieurs agents de fluidification .

16. La composition granulée selon la revendication 1 ou 2 qui comprend en outre les additifs convenables suivants :

 - f) de 0,5 à 30% en poids du produit sec, de un ou plusieurs agents de désintégration ; et/ou
 - g) de 0,5 à 10% en poids du produit sec, de un ou plusieurs liants ; et/ou
 - h) de 0,01 à 2% en poids du produit sec, de un ou plusieurs pigments ; et/ou
 - i) de 0,001 à 4% en poids du produit sec, de un ou plusieurs agents répulsifs.

17. La composition granulée selon la revendication 1 ou 2 qui comprend en outre les additifs convenables suivants :

 - f) de 1 à 20% en poids du produit sec, de un ou plusieurs agents de désintégration ; et/ou
 - g) de 1 à 5% en poids du produit sec, de un ou plusieurs liants ; et/ou
 - h) de 0,01 à 2% en poids du produit sec, de un ou plusieurs pigments ; et/ou
 - i) de 0,002 à 2% en poids du produit sec, de un ou plusieurs agents répulsifs.

18. La composition granulée selon la revendication 1 ou 2 extrudée ou coupée.

19. Un procédé de préparation de la composition granulée selon la revendication 1 comprenant les étapes suivantes :

 - les différents constituants sont intimement mélangés ensemble dans un mélangeur mécanique connu, puis l'on ajoute de environ 10 à 60% d'eau par rapport au poids du mélange ;
 - puis l'on extrude le mélange ainsi obtenu dans une extrudeuse classique, la température du produit pendant l'extrusion étant inférieure à 65°C, et la pression prise juste à l'entrée de la filière, étant supérieure à $2.10^5$ Les composés suivants ont été obtenus par un procédé similaire;
 - puis, les bâtonnets obtenus à la sortie de la filière sont coupés pour donner des granulés ;
 - puis, les granulés ainsi formés sont soumis à une étape de séchage.

20. Le procédé selon la revendication 19 dans lequel la température du produit pendant l'extrusion est compris entre 20°C et 40°C, et la température prise juste avant l'entrée de la filière, est comprise entre $3.10^5$ et 10 Mpa.

21. Le procédé selon la revendication 20 dans lequel l'étape finale de séchage, quand elle est réalisée, dure généralement de l'ordre de 20 minutes à 3 heures à une température comprise entre environ 40°C et 150°C.

22. Un procédé de préparation de la composition granulée selon la revendication 2 comprenant les étapes suivantes :

 - les différents constituants sont intimement mélangés ensemble dans un mélangeur mécanique connu, puis l'on ajoute de environ 10 à 60% d'eau par rapport au poids du mélange ;
 - puis l'on extrude le mélange ainsi obtenu dans une extrudeuse classique, la température du produit pendant l'extrusion étant inférieure à 65°C, et la pression prise juste à l'entrée de la filière, étant supérieure à $2.10^5$ Pa ;
 - puis, les bâtonnets obtenus à la sortie de la filière sont coupés pour donner des granulés ;
 - puis, les granulés ainsi formés sont soumis à une étape de séchage.

23. Le procédé selon la revendication 22 dans lequel la température du produit pendant l'extrusion est compris entre 20°C et 40°C, et la température prise juste avant l'entrée de la filière, est comprise entre $3.10^5$ et 10 Mpa.

24. Le procédé selon la revendication 22 dans lequel l'étape finale de séchage, quand elle est réalisée, dure généralement de l'ordre de 20 minutes à 3 heures à une température comprise entre environ 40°C et 150°C.

25. Un procédé d'utilisation des compositions granulées selon la revendication 1 pour protéger les plantes dans lequel la composition est appliquée sur le sol où poussent, ou, où doivent pousser les plantes.

26. Un procédé d'utilisation des compositions granulées selon la revendication 1 pour protéger les plantes dans lequel la composition est appliquée sur le sol où poussent, ou, où doivent pousser les plantes.

27. Le procédé d'utilisation selon la revendication 25 ou 26 dans lequel la composition est appliquée :

   - par répartition en pleine surface ; ou,
   - par dépôt des granulés dans la raie de semis au moment de la plantation des graines du végétal ; ou,
   - par enfouissement des granulés dans le sol ; ou,
   - par dépôt localisé des granulés, en particulier au pied des plantes à protéger.

28. Le procédé d'utilisation selon la revendication 25 ou 26 dans lequel la dose efficace de la composition granulée à appliquer est, dans la cas d'une application en pleine surface, comprise entre 5kg/ha et 200kg/ha, et, dans la cas d'un traitement localisé dans la raie de semis, est comprise entre 0,1 et 5 kg/km.